# EUROPÄISCHE PATENTSCHRIFT

(11) **EP 3 865 380 B1**
(45) Veröffentlichungstag und Bekanntmachung des Hinweises auf die Patenterteilung: **13.09.2023**
(21) Anmeldenummer: 21156991.8
(22) Anmeldetag: 12.02.2021
(51) Int. Cl.: B62D 29/04, B32B 15/08, B62D 63/06, B62D 63/08, B32B 1/00, B32B 3/30, B32B 5/02, B32B 15/14, B32B 15/20

(54) **PLATTENFÖRMIGES BAUELEMENT SOWIE KAROSSERIE FÜR EIN FREIZEITFAHRZEUG MIT EINEM SOLCHEN BAUELEMENT**
PLATE-SHAPED STRUCTURAL ELEMENT AND BODY FOR A LEISURE VEHICLE WITH SUCH A STRUCTURAL ELEMENT
COMPOSANT EN FORME DE PANNEAU, AINSI QUE CARROSSERIE POUR UN VÉHICULE DE LOISIR DOTÉ D'UN TEL COMPOSANT

(30) Priorität: 12.02.2020 DE 102020103544
(43) Veröffentlichungstag der Anmeldung: 18.08.2021
(73) Patentinhaber: Erwin Hymer Group SE, 88339 Bad Waldsee (DE)
(72) Erfinder: Buck, Rainer, 88239 Wangen i. Allgäu (DE); Metzler, Marcus, 88339 Bad Waldsee (DE); Dorn, Günter, 88282 Schlier (DE)
(74) Vertreter: Waller, Stefan

(56) Entgegenhaltungen:
- EP-A1- 1 649 993
- EP-A1- 3 034 226
- EP-A1- 3 511 085
- DE-A1-102016 224 340
- DE-U1- 9 402 906
- US-A1- 2019 291 559

## Beschreibung

Die Erfindung betrifft ein plattenförmiges Bauelement, eine Karosserie für ein Freizeitfahrzeug mit einem solchen Bauelement, ein Verfahren zur Herstellung eines solchen Bauelements sowie ein Verfahren zur Herstellung einer Karosserie für ein Freizeitfahrzeug.

Im klassischen Sinne setzt sich ein Kraftfahrzeug aus den Komponenten Fahrgestell, Antrieb und Karosserie zusammen. Das Fahrgestell, auch Chassis, Rahmen oder Untergestell genannt, bildet ein Grundgerüst, das den Antrieb, die Karosserie und die Nutzlast trägt und gegen äußere Krafteinwirkungen stabilisiert und an dem diese montiert sind. Als Rahmen wurden verschiedene Konstruktionsformen genutzt. Die Karosserie, die auf den Rahmen aufgesetzt wird und im Allgemeinen verschraubt ist, soweit es sich um ein separates Bauteil und nicht um eine integrierte Bauform, wie bei einer selbstragenden Karosserie, handelt, bildet dabei eine Außenhaut zum Schutz der Insassen oder der transportierten Güter. Als Fahrwerk bezeichnet man hier die Gesamtheit aller Teile eines Landfahrzeugs, die eine Verbindung des Fahrgestells über die Räder zu Fahrbahn herstellen.

Unter einem Freizeitfahrzeug wird ein Fahrzeug oder Anhänger verstanden, welches oder welcher zumindest ein mobil einsetzbares Element zum Camping aufweist oder zumindest temporär eine Einrichtung zum Campen aufweisen kann. Ein Freizeitfahrzeug ist insbesondere ein Campingfahrzeug verstanden. Unter einem Freizeitmobil wird ein motorisiertes Freizeitfahrzeug verstanden. Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil. Ein Wohnwagen kann zum Beispiel alternativ als Caravan oder Campinganhänger bezeichnet werden.

Im Stand der Technik ist bei Freizeitfahrzeugen eine Leichtbauweise bekannt.

Unter dem Begriff "Leichtbauweise" wird eine Konstruktionsweise verstanden, die eine Gewichtseinsparung und/oder eine Steigerung der Ressourceneffizienz zum Ziel hat. Ziel der Leichtbauweise ist die Einsparung von Roh- und Werkstoffen, Kosten und Energie bei der Herstellung, Nutzung und Verwertung eines Produkts. Insbesondere bei bewegten Massen, wie z.B. Fahrzeugen, können durch Leichtbau die Betriebskosten reduziert bzw. die Nutzlast erhöht werden. So ist bei Fahrzeugen eine geringere Antriebsleistung für die gleichen Fahreigenschaften notwendig, gleichzeitig sinkt der Kraftstoffverbrauch und das Verhältnis von Fahrzeug- zu Frachtgewicht verbessert sich.

Insbesondere bei Campingfahrzeugen oder Freizeitfahrzeugen ist die Leichtbauweise wichtig, da die entsprechende Leichtbau-Technologie durch neuartige Materialien und Bauweisen ein optimales Zusammenspiel aus Ausstattung, Gewicht und Effizienz ermöglicht. Je weniger die Konstruktion wiegt, desto mehr Ausstattung kann in das Freizeitmobil integriert werden - ohne das zulässige Gesamtgewicht laut Führerscheinklassen zu gefährden. Zudem sind gewichtsreduzierte Caravans eine wichtige Voraussetzung beim Einsatz von Elektroautos. Ferner wird durch weniger Gewicht der Treibstoffverbrauch reduziert, wodurch das Freizeitmobil insgesamt effizienter wird. Ein Beispiel, worin ein platten-förmiges Bauelement, welches mindestens eine Faltung aufweist, so dass das gefaltete Bauelement zumindest einen Teil einer Karosserie eines Freizeitfahrzeuges bildet, ist durch die EP 3 511 085 A1, die DE 94 02 906 U1, die US 2019/291559 A1 und die DE 10 2016 224340 A1 bekannt.

Eine Aufgabe der vorliegenden Erfindung liegt darin, den Stand der Technik zu verbessern. Es ist insbesondere eine Aufgabe der Erfindung, eine Karosserie bzw. ein Bauteil für eine Karosserie eines Freizeitfahrzeuges anzugeben, welches ein deutlich reduziertes Gewicht aufweist und welches gleichzeitig robust und widerstandsfähig ist.

Diese Aufgabe wird durch ein plattenförmiges Bauelement mit den Merkmalen des unabhängigen Patentanspruchs 1 gelöst. Vorteilhafte Weiterbildungen der Erfindung sind in den Unteransprüchen angegeben.

Unter einem plattenförmigen Bauelement wird vorliegend ein Bauelement verstanden, welches sich im Wesentlichen entlang einer zweidimensionalen Ebene erstreckt und entlang einer dritten Dimension eine im Vergleich zu den Maßen der Ebene eine vergleichsweise kleine Dicke aufweist.

Unter einer Faltung des Bauelements wird vorliegend ein Umbiegen der Platte entlang einer geraden Linie verstanden, sodass aus der zweidimensionalen Oberfläche des Bauelements ein dreidimensionales Gebilde wird, nämlich zwei Halbebenen, welche sich an der geraden Linie, an welcher gefaltet wurde, treffen.

Bevorzugt bildet das plattenförmige Element die gesamte Karosserie des Freizeitfahrzeugs.

Das erfindungsgemäße plattenförmige Element weist vorteilhafterweise ein deutlich reduziertes Gewicht auf. Hierdurch kann ein Fahrzeuggewicht eines Freizeitfahrzeuges um ein Drittel reduziert werden.

Ein weiterer Vorteil besteht darin, dass das plattenförmige Bauelement aufgrund der Faltung eine Eigensteifigkeit erfährt. Auch liegt ein Vorteil des Bauelements darin, dass durch das Falten keine Trennfugen zwischen unterschiedlichen Bauelementen auftreten.

Ferner kann durch das plattenförmige Bauelement kinetische Energie, welche vom Freizeitfahrzeug auf das Bauteil übertragen wird, deutlich besser aufgenommen und abgebaut werden.

Gemäß einer bevorzugten Ausführungsform weist das Bauelement mindestens zwei Faltungen auf, so dass durch die Faltungen des Bauelements eine Außenkante des Bauelements einen zick-zack-förmigen Verlauf aufweist. Der zick-zack-förmige Verlauf der Außenkante erhöht vorteilhafterweise die Stabilität des Bauelements. Ferner kann das plattenförmige Bauelement kinetische Energie, welche vom Freizeitfahrzeug auf das Bauteil übertragen wird, deutlich besser aufgenommen und abgebaut werden.

Unter einem Faserverbundbauteil wird ein Bauteil verstanden, dessen Material einen Faserverbund aufweist oder aus einem solchen besteht. Ein Faserverbund kann alternativ auch Faser-Kunststoff-Verbund (FKV), faserverstärkter Kunststoff oder Faserverbundkunststoff (FVK) genannt werden. Unter einem Faserverbund wird ein Werkstoff verstanden, welcher Verstärkungsfasern und eine Kunststoffmatrix aufweist. Die Matrix umgibt die Fasern, die durch Adhäsiv- oder Kohäsivkräfte an die Matrix gebunden sind. Durch die Verwendung von Faserwerkstoffen, hat ein Faserverbund im Allgemeinen ein richtungsabhängiges Elastizitätsgesetz.

Die Kernschichtplatte ist erfindungsgemäss ein Schaumstoff oder eine Wabenstruktur Ohne Matrixwerkstoff sind die hohen spezifischen Festigkeiten und Steifigkeiten der Verstärkungsfaser nicht nutzbar. Erst durch die geeignete Kombination von Faser- und Matrixwerkstoff entsteht ein neuer Konstruktionswerkstoff.

Ein Faserverbund weist in der Regel eine hohe spezifische Steifigkeit und Festigkeit auf. Dies macht ihn zu einem geeigneten Werkstoff in Leichtbauanwendungen. Aus Faserverbunden werden überwiegend flächige Strukturen hergestellt.

Die mechanischen und thermischen Eigenschaften von Faserverbunden können über eine Vielzahl von Parametern eingestellt werden. Neben der Faser-Matrix-Kombination können z.B. der Faserwinkel, der Faservolumenanteil, die Schichtreihenfolge usw. variiert werden.

Faser-Kunststoff-Verbunde gehören zu der Klasse der faserverstärkten Werkstoffe, die Mitglied der Klasse der Verbundwerkstoffe sind.

Ein Faserkunststoffverbund kann als Konstruktion aufgefasst werden. Seine Elemente können so kombiniert werden, dass sich die gewünschten Eigenschaften einstellen. Durch das Zusammenspiel der spezifischen Eigenschaften von Faserwerkstoff und Matrixwerkstoff entsteht ein neuer Werkstoff.

Die Fasern leiten die Kräfte. Durch ihre im Vergleich zur Matrix hohe Steifigkeit ziehen sie die Last auf sich. Da die Faser eine höhere Steifigkeit als die Matrix hat, wird die Last entlang der Fasern geleitet. Quer zur Faser haben Matrix und Faser oft ähnliche Elastizitätsmodule. Zusätzlich können die Kräfte durch Adhäsivkräfte über die Faser-Matrix-Grenzfläche geleitet werden. Daher findet quer zur Faser in der Regel keine Verstärkungswirkung statt. Grund hierfür ist auch die Dehnungsvergrößerung.

Die Matrix bettet die Fasern. "Betten" meint dabei, dass sie die Fasern räumlich fixiert und die Lasteinleitung und Lastausleitung ermöglicht. Zusätzlich stützt die Matrix die Fasern, z.B. gegen Ausknicken bei faserparallelem Druck. Die Lastübertragung erfolgt über die Adhäsion zwischen Faser und Matrix. Sie kann über Normal- oder Schubkräfte erfolgen. Verbunde, bei denen keine Faser-Matrix-Haftung besteht, sind nur in Sonderfällen belastbar. Die Matrix hat zudem die Aufgabe, die Fasern gegen Umgebungseinflüsse zu schützen.

Erfindungsgemäss weist das Verbundbauteil eine Sandwichbauweise auf. Unter dem Begriff "Sandwichplatte", welche eine Sandwichbauweise aufweist, kann eine im Leichtbau verwendete Bauplatte verstanden werden. Eine Sandwichplatte kann drei Schichten aufweisen, insbesondere zwei außenliegende Deckschichtplatten mit einer innenliegenden Kernschichtplatte. Das Material der Kernschichtplatte kann ein Schaummaterial sein.

Gemäß noch einer weiteren bevorzugten Ausführungsform weist das Verbundbauteil GFK (glasfaserverstärkten Kunststoff) und/oder CFK (kohlenstofffaserverstärkten Kunststoff) auf.

Vorteilhaft kann der Einschnitt eine V-Kerbe sein, deren Flanken durch die Faltung aneinandergelegt sind.

Die Flanken können verklebt sein.

Bevorzugt wird das plattenförmige Bauelement vor dem Falten eingeschnitten, insbesondere mit einem V-förmigen Schnitt, insbesondere einer Fräsung, wobei die Tiefe des Schnitts kleiner als die Dicke der Platte ist. Nach der Faltung kann in den insbesondere V-förmigen Schnitt zur Erhöhung der Stabilität des Endprodukts ein Klebstoff gegeben werden. Dadurch ergibt sich eine höhere Festigkeit und wird die Schwächung durch den Einschnitt zumindest zum Teil wieder ausgeglichen.

Vorteilhaft bestehen eine oder beide Deckschichtplatten aus Metall, insbesondere Aluminium.

Ein solches Material ist leicht biegbar, weist eine optisch vorteilhafte Oberfläche auf und eine zugleich hohe Festigkeit.

Bevorzugt weist ein Bauelement eine Faltung mit einem rechteckigen Winkel zwischen den beiden gefalteten Teilen des Bauelements auf. Mehrere Bauelemente können vorteilhafterweise quader- bzw. kastenförmige Formteile bilden, welche eine erhöhte Stabilität aufweisen.

Gemäß einer anderen bevorzugten Ausführungsform ist eine Faltung des plattenförmigen Bauelements mithilfe einer Faltung entlang einer geraden Linie auf dem plattenförmigen Bauelement erzeugt.

Die gefalteten Bauteile bilden dreidimensionale Formteile, welche dann in einem weiteren Schritt zu einer Karosserie zusammengesetzt werden können. Diese dreidimensionalen Vorteile können vorteilhafterweise ohne ein Formwerkzeug hergestellt werden.

Es können durch zwei Faltungen, die sich überschneiden, bei einer Linie auf der einen Seite des Schnittpunkts eine V-förmige Faltung nach oben und auf der anderen Seite des Schnittpunkts eine V-förmige Faltung nach unten gebildet werden.

Gemäß einer bevorzugten Ausführungsform weist das Bauelement mindestens zwei und bevorzugt eine Mehrzahl von Faltungen auf, so dass durch die Faltungen des Bauelements eine Außenkante des Bauelements einen zick-zack-förmigen Verlauf aufweist. Der zick-zack-förmige Verlauf der Außenkante erhöht vorteilhafterweise die Stabilität des Bauelements. Ferner kann das plattenförmige Bauelement kinetische Energie, welche vom Freizeitfahrzeug auf das Bauteil übertragen wird, deutlich besser aufgenommen und abgebaut werden.

Gemäß einem weiteren Aspekt wird die Aufgabe der Erfindung durch eine Karosserie für ein Kraftfahrzeug gelöst. Die Karosserie weist mindestens ein oben beschriebenes plattenförmiges Bauelement auf. Es ist weiterhin bevorzugt, dass die Karosserie mehr als zwei oben beschriebene plattenförmige Bauelemente aufweist. Hierbei ist ferner bevorzugt, dass die plattenförmigen Bauelemente miteinander so verbunden sind, dass sich ein stabiles Gebilde, die oben genannte Karosserie, bildet. Um die plattenförmigen Bauteile miteinander zu verbinden, können die Bauteile miteinander verklebt sein. Ein weiterer Vorteil, dass die Bauteile miteinander verklebt sind, liegt darin, dass die kinetische Energie besser aufgenommen werden kann.

Die Karosserie kann ebenso wie die oben genannten Formteile vorteilhafterweise ohne ein Formwerkzeug hergestellt werden.

Gemäß einem weiteren Aspekt wird die Aufgabe der Erfindung durch ein Verfahren zur Herstellung eines oben beschriebenen plattenförmigen Bauelements gelöst. In einem ersten Schritt des Verfahrens wird ein plattenförmiges Bauelement bereitgestellt.

Gemäß einem zweiten Schritt des Verfahrens wird ein Schnitt in dem plattenförmigen Bauelement angefertigt, wobei der Schnitt entlang einer geraden Linie auf der Oberfläche des Bauelements angeordnet ist und eine Tiefe des Schnitts kleiner als eine Dicke des plattenförmigen Bauelements ist.

Gemäß einem dritten Schritt des Verfahrens wird das plattenförmige Bauelement entlang des im Bauelement angeordneten Schnittes gefaltet oder gebogen, sodass eine Form des gefalteten plattenförmigen Bauelements zumindest einen Teil einer Karosserie eines Freizeitfahrzeuges bildet.

Gemäß einem weiteren Aspekt wird die Aufgabe der Erfindung durch ein Verfahren zur Herstellung einer Karosserie für ein Freizeitfahrzeug gelöst.

Gemäß einem ersten Schritt des Verfahrens wird mindestens ein gefaltetes plattenförmiges Bauelement hergestellt, welches gemäß dem oben beschriebenen Verfahren zur Herstellung eines plattenförmigen Bauelements hergestellt ist.

Bevorzugt werden gemäß dem ersten Schritt mindestens zwei gefaltete plattenförmige Bauteile hergestellt.

Falls mindestens zwei Bauelemente hergestellt wurden, so wird gemäß dem zweiten Schritt des Verfahrens die mindestens zwei gefalteten, plattenförmigen Bauelementen zu der Karosserie zusammengesetzt oder zusammengefügt. Falls nur ein Bauelement hergestellt wurde, so entfällt der zweite Schritt des Verfahrens.

Ausführungsbeispiele der Erfindung sind in den Zeichnungen dargestellt und werden in der nachfolgenden Beschreibung näher erläutert.

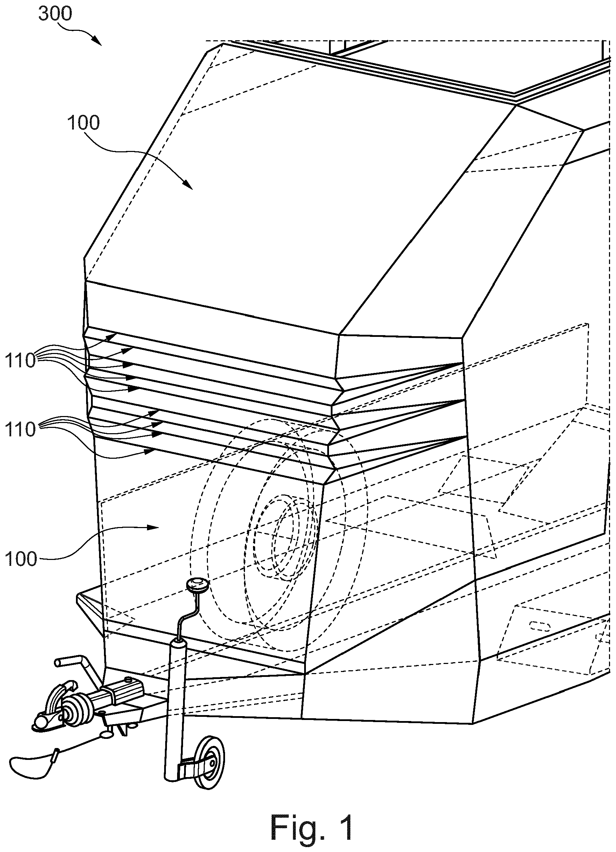

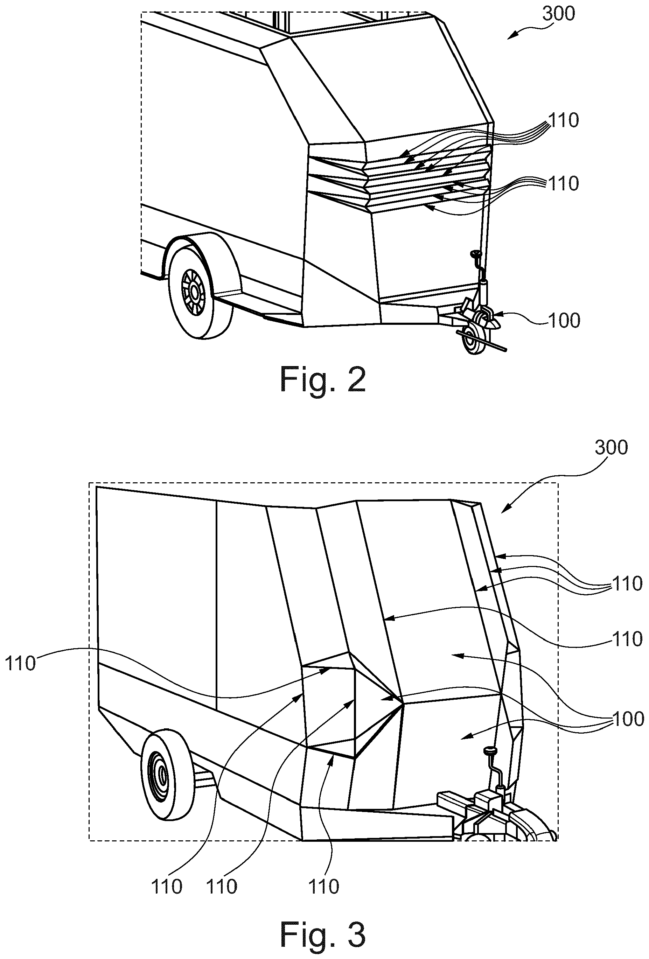

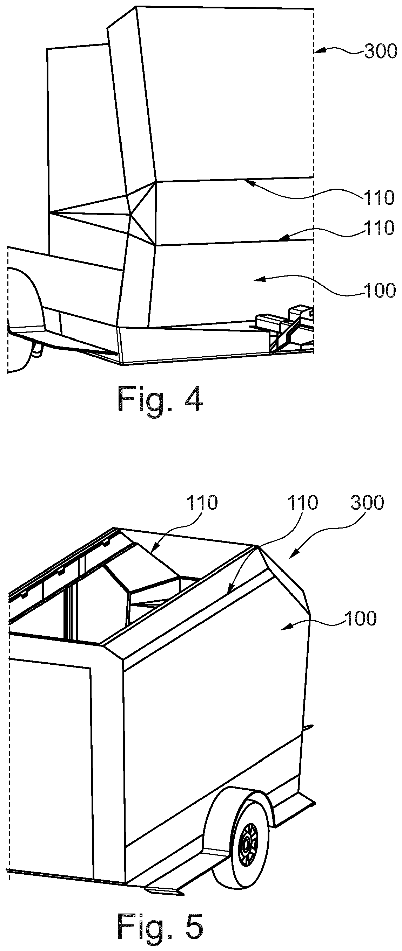

Die Figuren 1 bis 5 zeigen jeweils eine Karosserie für ein Freizeitfahrzeug mit jeweils mindestens einem plattenförmigen Bauelement, wobei sowohl die Karosserie als auch das plattenförmige Bauelement Gegenstand der vorliegenden Erfindung sind.
Figur 1 zeigt eine Karosserie 300 eines Freizeitfahrzeugs. Die Karosserie 300 besteht aus einer Vielzahl von gefalteten plattenförmigen Bauelementen 100. Die gefalteten plattenförmigen Bauelemente 100 weisen jeweils eine Faltung 110 auf. Die unterschiedlichen plattenförmigen Bauelement 100, welche in der Karosserie 300 einander angrenzen, sind miteinander verklebt.
Figur 2, Figur 3, Figur 4 und Figur 5 zeigen unterschiedliche Ansichten von unterschiedlichen Ausführungsformen der Karosserie 300.

## Patentansprüche

1. Plattenförmiges Bauelement, welches mindestens eine Faltung (110) aufweist, so dass das gefaltete Bauelement (100) zumindest einen Teil einer Karosserie (300) eines Freizeitfahrzeuges bildet, wobei das Bauelement (100) ein Verbundbauteil, insbesondere ein Faserverbundbauteil, aufweist oder aus einem Verbundbauteil, insbesondere einem Faserverbundbauteil, besteht,
**dadurch gekennzeichnet,**
**dass**.das Verbundbauteil eine Sandwichbauweise aufweist wobei die Sandwichbauweise zwei außenliegende Deckschichtplatten mit einer Kernschichtplatte mit einem innenliegenden Schaumstoff oder einer Wabenstruktur aufweist und an einer Faltung eine Deckschicht und die Kernschichtplatte eingeschnitten sind, während die andere Deckschichtplatte durchläuft.

2. Plattenförmiges Bauelement nach Anspruch 1,
**dadurch gekennzeichnet,**
**dass** der Einschnitt eine V-Kerbe ist, deren Flanken durch die Faltung aneinandergelegt sind.

3. Plattenförmiges Bauelement nach Anspruch 2.
**dadurch gekennzeichnet,**
**dass** die Flanken verklebt sind.

4. Plattenförmiges Bauelement nach einem der Ansprüche 2 oder 3.
**dadurch gekennzeichnet,**
**dass** eine oder beide Deckschichtplatten aus Metall, insbesondere Aluminium bestehen.

5. Plattenförmiges Bauelement nach einem der Ansprüche 1 bis 4,
**dadurch gekennzeichnet,**
**dass** das Verbundbauteil GFK und/oder CFK aufweist.

6. Plattenförmiges Bauelement nach einem der vorangegangenen Ansprüche.
**dadurch gekennzeichnet,**
**dass** eine Faltung des plattenförmigen Bauelements (100) mithilfe einer Faltung entlang einer geraden Linie auf dem plattenförmigen Bauelement (100) erzeugt ist.

7. Plattenförmiges Bauelement nach einem der vorangegangenen Ansprüche.
**dadurch gekennzeichnet,**
**dass** durch zwei Faltungen, die sich überschneiden, bei einer Linie auf der einen Seite des Schnittpunkts eine V-förmige Faltung nach oben und auf der anderen Seite des Schnittpunkts eine V-förmige Faltung nach unten gebildet wird.

8. Plattenförmiges Bauelement nach einem der vorangegangenen Ansprüche.
**dadurch gekennzeichnet,**
**dass** das Bauelement (100) mindestens zwei Faltungen (110), bevorzugt eine Mehrzahl, aufweist, so dass durch die Faltungen des Bauelements (100) eine Außenkante des Bauelements (100) einen zick-zack-förmigen Verlauf aufweist.

9. Karosserie für ein Freizeitfahrzeug
aufweisend:
mindestens ein plattenförmiges Bauelement (100) nach einem der vorangegangenen Ansprüche.

10. Verfahren zur Herstellung eines plattenförmigen Bauelements nach einem der Ansprüche 1 bis 8,
mit folgenden Schritten:
- Bereitstellen eines plattenförmigen Bauelements (100);
- Anfertigen eines Schnittes in dem plattenförmigen Bauelement (100), wobei der Schnitt entlang einer geraden Linie auf der Oberfläche des Bauelements (100) angeordnet ist und eine Tiefe des Schnitts kleiner als eine Dicke des plattenförmigen Bauelements (100) ist;
- Falten oder Biegen des plattenförmigen Bauelements (100) entlang des im Bauelement (100) angeordneten Schnittes, so dass eine Form des gefalteten plattenförmigen Bauelements (100) zumindest einen Teil einer Karosserie (300) eines Freizeitfahrzeuges bildet.

11. Verfahren zur Herstellung eines plattenförmigen Bauelements nach Anspruch 10,
**dadurch gekennzeichnet,**
**dass** der Schnitt als V-förmige Fräsung ausgeführt wird und optional ein Klebstoff in die Kerbe eingebracht wird vor dem falten oder Biegen.

12. Verfahren zur Herstellung einer Karosserie für ein Freizeitfahrzeug nach Anspruch 9, mit folgenden Schritten:
- Herstellen von mindestens zwei gefalteten, plattenförmigen Bauelementen (100) durch ein Verfahren nach Anspruch 10 oder 11;
- Zusammensetzen oder Zusammenfügen der mindestens zwei gefalteten plattenförmigen Bauelementen (100) zu der Karosserie (300).

## Claims

1. Plate-shaped structural element which has at least one fold (110) such that the folded structural element (100) forms at least part of a body (300) of a leisure vehicle, wherein the structural element (100) comprises a composite component, in particular a fibre composite component, or consists of a composite component, in particular a fibre composite component,
**characterized**
**in that** the composite component comprises a sandwich construction, the sandwich construction having two outer cover layer panels with a core layer panel with an internal foam or a honeycomb structure, and a cover layer and the core layer panel being cut into at a fold while the other cover layer panel is continuous.

2. Plate-shaped structural element according to Claim 1,
**characterized**
**in that** the incision is a V notch, the flanks of which are placed against one another by means of the fold.

3. Plate-shaped structural element according to Claim 2,
**characterized**
**in that** the flanks are adhesively bonded.

4. Plate-shaped structural element according to either of Claims 2 and 3,
**characterized**
**in that** one or both cover layer panels consist of metal, in particular aluminium.

5. Plate-shaped structural element according to one of Claims 1 to 4,
**characterized**
**in that** the composite component comprises GFRP and/or CFRP.

6. Plate-shaped structural element according to one of the preceding claims,
**characterized**
**in that** a fold in the plate-shaped structural element (100) is produced on the plate-shaped structural element (100) with the aid of folding along a straight line.

7. Plate-shaped structural element according to one of the preceding claims,
**characterized**
**in that** two folds which intersect result, on a line on one side of the intersecting point, in the formation of a V-shaped fold upwards and, on the other side of the intersecting point, in the formation of a V-shaped fold downwards.

8. Plate-shaped structural element according to one of the preceding claims,
**characterized**
**in that** the structural element (100) has at least two folds (110), preferably a plurality, and therefore an outer edge of the structural element (100) has a zigzagshaped profile because of the folds in the structural element (100).

9. Body for a leisure vehicle
having:
at least one plate-shaped structural element (100) according to one of the preceding claims.

10. Method for producing a plate-shaped structural element according to one of Claims 1 to 8,
comprising the following steps:
- providing a plate-shaped structural element (100);
- producing a cut in the plate-shaped structural element (100), the cut being arranged along a straight line on the surface of the structural element (100) and a depth of the cut being smaller than a thickness of the plate-shaped structural element (100);
- folding or bending the plate-shaped structural element (100) along the cut arranged in the structural element (100) such that a shape of the folded plate-shaped structural element (100) forms at least part of a body (300) of a leisure vehicle.

11. Method for producing a plate-shaped structural element according to Claim 10,
**characterized**
**in that** the cut is in the form of a V-shaped milled portion and an adhesive is optionally introduced into the notch before the folding or bending.

12. Method for producing a body for a leisure vehicle according to Claim 9, comprising the following steps:
- producing at least two folded, plate-shaped structural elements (100) by means of a method according to Claim 10 or 11;
- assembling or joining together the at least two folded plate-shaped structural elements (100) to form the body (300) .

## Revendications

1. Composant en forme de panneau, qui présente au moins un pli (110), de sorte que le composant plié (100) forme au moins une partie d'une carrosserie (300) d'un véhicule de loisirs, le composant (100) présentant un composant composite, en particulier un composant composite à fibres, ou étant constitué d'un composant composite, en particulier un composant composite à fibres,
**caractérisé en ce que**
le composant composite présente une construction en sandwich, la construction en sandwich présentant deux panneaux de couche de recouvrement extérieurs avec un panneau de couche centrale ayant une structure interne en mousse ou en nid d'abeilles et, au niveau d'un pli, une couche de recouvrement et le panneau de couche centrale étant découpés, tandis que l'autre panneau de couche de recouvrement s'étend à travers.

2. Composant en forme de panneau selon la revendication 1,
**caractérisé en ce que** la découpe est une entaille en V dont les flancs sont placés l'un contre l'autre par le pliage.

3. Composant en forme de panneau selon la revendication 2,
**caractérisé en ce que** les flancs sont collés.

4. Composant en forme de panneau selon l'une des revendications 2 ou 3,
**caractérisé en ce que**
l'une ou les deux panneaux de recouvrement sont en métal, en particulier en aluminium.

5. Composant en forme de panneau selon l'une des revendications 1 à 4,
**caractérisé en ce que**
que le composant composite comprend du PRF et/ou du PRFC.

6. Composant en forme de panneau selon l'une des revendications précédentes,
**caractérisé en ce que**
qu'un pli du composant en forme de panneau (100) est réalisé au moyen d'un pli le long d'une ligne droite sur le composant en forme de panneau (100).

7. Composant en forme de panneau selon l'une des revendications précédentes,
**caractérisé**
**en ce que** deux plis qui se croisent forment un pli en V vers le haut sur une ligne d'un côté de l'intersection et, de l'autre côté de l'intersection, un pli en V vers le bas.

8. Composant en forme de panneau selon l'une des revendications précédentes,
**caractérisé en ce que**
que le composant (100) présente au moins deux plis (110), de préférence une pluralité, de sorte que, du fait des plis du composant (100), un bord extérieur du composant (100) présente une forme en zigzag.

9. Carrosserie pour un véhicule de loisirs, comprenant : au moins un composant (100) en forme de panneau selon l'une des revendications précédentes.

10. Procédé de fabrication d'un composant en forme de panneau selon l'une des revendications 1 à 8, comprenant les étapes suivantes :
- préparation d'un composant en forme de panneau (100) ;
- réalisation d'une découpe dans le composant en forme de panneau (100), la découpe étant située le long d'une ligne droite sur la surface du composant (100) et une profondeur de la découpe étant inférieure à une épaisseur du composant en forme de panneau (100) ;
- pliage ou cintrage du composant en forme de panneau (100) le long de la coupe agencée dans le composant (100), de sorte qu'une forme du composant en forme de panneau plié (100) forme au moins une partie d'une carrosserie (300) d'un véhicule de loisirs.

11. Procédé de fabrication d'un composant en forme de panneau selon la revendication 10,
**caractérisé en ce que**
la découpe est réalisée sous la forme d'un fraisage en forme de V et, en option, un adhésif est appliqué dans l'encoche avant le pliage ou le cintrage.

12. Procédé de fabrication d'une carrosserie pour un véhicule de loisir selon la revendication 9, comprenant les étapes suivantes :
- fabrication d'au moins deux composants de construction (100) pliés en forme de panneau par un procédé selon la revendication 10 ou 11 ;
- assemblage ou montage des au moins deux composants de construction (100) en forme de panneaux pliées pour former la carrosserie (300).
